# EUROPEAN PATENT SPECIFICATION

(11) **EP 0 470 970 B1**
(45) Date of publication and mention of the grant of the patent: **14.07.1993**
(21) Application number: 90906147.5
(22) Date of filing: 29.03.1990
(51) Int. Cl.: A21D 6/00

(54) **ULTRASONIC TREATMENT OF DOUGH PRODUCTS**
ULTRASCHALLBEHANDLUNG VON TEIGERZEUGNISSEN
TRAITEMENT ULTRASONIQUE DE PATES

(30) Priority: 13.04.1989 DK 1787/89
(43) Date of publication of application: 19.02.1992
(73) Proprietor: WALTER, Arie Albertus, DK-3600 Frederikssund (DK)
(72) Inventor: WALTER, Arie Albertus, DK-3600 Frederikssund (DK)
(74) Representative: Lind, Gunnar
(86) International application number: DK9000081
(87) International publication number: WO9011690

(56) References cited:
- EP-A- 0 311 240
- DE-B- 2 657 750
- US-A- 3 503 343

## Description

The present invention relates to a method for the removal of stresses and strains in rolled out, laminated dough products in which undesired stresses and strains occur.

The invention also relates to the use of a treatment with ultrasonic waves for the removal of stresses and strains in rolled out, laminated dough products in which undesired stresses and strains occur.

When performing a rolling out or other mechanical processing of dough or dough products, in particular laminated dough for puff pastry or Danish pastry, which comprise a rolled out, laminated product of dough and margarine or butter with or without added yeast, respectively, undesired stresses and strains occur in the dough during the rolling out. These strains and stresses can normally only be removed by using an appropriate extended resting time and/or by means of an otherwise unsuitable and undesired heating.

The object of the invention is to provide a method of the type referred to above in which the stresses and strains are removed from the rolled out, laminated dough in such a manner that the use of resting time is substantially decreased or completely avoided without simultaneous substantial heating of the dough product.

According to the invention this object is achieved by means of a method of the type referred to above, the said method being characterized in that the rolled out, laminated dough products are subjected to a treatment with ultrasonic waves.

It has thus surprisingly been found that by ultrasonic treatment using a frequency range and a time interval which should, of course, be adapted to the specific product being treated, it is possible to obtain a quick removal of stresses and strains from the rolled out, laminated dough or dough product, whereby undesired shrinking of the material is avoided.

As the source of ultrasonic waves there can be used any type of suitable apparatus of current or modified type.

It is known to treat dough or dough products by means of ultrasonic waves with the sole purpose of obtaining an effective mixing of the dough whereby a decrease in the rising time of the dough can be achieved, the mixing time and the process temperature also being reduced. Such known ultrasonic mixing treatments are described e.g. in US Patent Specification No. 3,503,343 and in SU Patent Specification No. 348,189.

From EP-A2 311,240 it is known to process dough products simultaneously with a vibration treatment in order to avoid unnecessary stresses in the dough and unnecessary shrinking during the later processing of the dough.

From DE-B2 2,657,750 it is known to reduce the relaxation time in ready-formed pieces of dough by treatment in a microwave field, which brings about a temperature rise in the dough of 2 to 3°C in 10 seconds.

According to the present invention and in contrast to the prior art it has surprisingly been found that ultrasonic treatment of rolled out, laminated dough products in which undesired stresses and strains occur is particularly effective for removing the stresses and strains and for reducing or avoiding the otherwise required resting time. This could not be foreseen in view of the prior art, since the fact that treatment with ultrasonic waves can be used for mixing of dough and dough products does not amount to any incitement to the person skilled in the art to attempt to use an ultrasonic treatment for removing the stresses and strains in an already rolled out dough product, preferably a laminated product.

Thus, in contrast to the prior art referred to above the present invention is based on the concept of treating the rolled out, laminated dough products with ultrasonic waves, i.e. after the processing, mixing and forming of the dough, whereby there is obtained a relaxation of the dough, a reduction of the resting time, whereby undesired shrinking is avoided, and the avoidance of a heating of the rolled out, laminated dough product.

The invention is further illustrated in the following non-limiting example.

### Example

A puff pastry or Danish pastry dough was rolled out and laminated with a thickness of about 4 mm. The dough was then made into strips each having a width of 100 mm, and one of the strips was treated with ultrasonic waves (20 kHz) and various amplitudes. After baking immediately following the dough production clearly improved results as to shrinking (practically minimum shrinking) and a better baking result were experienced in the ultrasonic wave treated strip. The ultrasonic treatment time was extremely short, since the band carrying the dough strips was forwarded with a speed of from about 3 to about 5 meters per minute.

The apparatus used for the ultrasonic treatment can be of any suitable type, e.g. various constructions having a touch roll, or a so-called tuning fork construction arranged about 1 mm above the dough, or an inwardly curved tool (also without contact with the dough) which concentrates the ultrasonic wave beam.

The choice of apparatus used should be adapted to the specific needs. All forms of ultrasonic wave treatment show a positive effect, and various apparatus forms in connection with a freely selectable effect as to frequency and amplitude may be used.

## Claims

1. A method for the removal of stresses and strains in rolled out, laminated dough products in which undesired stresses and strains occur, **characterized** in that the rolled out, laminated dough products are subjected to a treatment with ultrasonic waves.

2. The use of a treatment with ultrasonic waves for the removal of stresses and strains in rolled out, laminated dough products in which undesired stresses and strains occur.

## Patentansprüche

1. Verfahren zur Aufhebung von Spannungen in ausgerollten laminierten Teigerzeugnissen, in denen unerwünschte Spannungen auftreten, dadurch gekennzeichnet, dass die ausgerollten, laminierten Teigerzeugnisse einer Ultraschallbehandlung unterworfen werden.

2. Verwendung einer Ultraschallbehandlung zur Aufhebung von Spannungen in ausgerollten, laminierten Teigerzeugnissen, in denen unerwünschte Spannungen auftreten.

## Revendications

1. Procédé pour éliminer des tensions dans des produits de pâte abaissés, laminés, dans lesquelles il se presente des tensions non désirés, characterisé par le fait que les produits de pâte abaissés, laminés sont soumis à un traitement ultrasonique.

2. Utilisation d'un traitement ultrasonique pour éliminer des tensions dans des produits de pâte abaissés, laminés, dans lesquelles il se presente des tensions non désirés.
